(19) Europäisches Patentamt
European Patent Office
Office européen des brevets

(11) **EP 1 301 558 B1**

(12) # FASCICULE DE BREVET EUROPEEN

(45) Date de publication et mention de la délivrance du brevet:
**08.06.2005 Bulletin 2005/23**

(21) Numéro de dépôt: **01957848.3**

(22) Date de dépôt: **15.06.2001**

(51) Int Cl.[7]: **C08G 69/00**, C08G 69/02, C08G 69/04

(86) Numéro de dépôt international:
**PCT/EP2001/006728**

(87) Numéro de publication internationale:
**WO 2001/096441 (20.12.2001 Gazette 2001/51)**

(54) **POLYAMIDES MODIFIES, COMPOSITIONS A BASE DE CES POLYAMIDES, ET LEUR PROCEDE DE FABRICATION**

MODIFIZIERTE POLYAMIDE, ZUSAMMENSETZUNGEN AUF BASIS DIESER POLYAMIDE UND VERFAHREN ZU IHRER HERSTELLUNG

MODIFIED POLYAMIDES, POLYAMIDE COMPOSITIONS, AND METHOD FOR MAKING THE SAME

(84) Etats contractants désignés:
**AT BE CH CY DE DK ES FI FR GB GR IE IT LI LU MC NL PT SE TR**

(30) Priorité: **16.06.2000 FR 0007705**

(43) Date de publication de la demande:
**16.04.2003 Bulletin 2003/16**

(73) Titulaire: **Rhodia Engineering Plastics Srl**
**20020 Ceriano Laghetto (MI) (IT)**

(72) Inventeurs:
- **PEDUTO, Nicolangelo**
  **I-20031 Cesano Maderno (IT)**
- **SPERONI, Franco**
  **I-Ceriano Laghetto (IT)**
- **ZHANG, Haichun**
  **I-20025 Legnano (MI) (IT)**

(74) Mandataire: **Esson, Jean-Pierre**
**Rhodia Services,**
**Direction de la Propriété Industrielle,**
**Centre de Recherches de Lyon**
**BP 62**
**85, avenue des Frères Perret**
**69192 Saint-Fons Cédex (FR)**

(56) Documents cités:
**EP-A- 0 682 057**
**WO-A-99/03909**
**FR-A- 2 743 077**
**FR-A- 2 779 730**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 301 558 B1

## Description

La présente invention concerne des polyamides modifiés, et plus particulièrement des polyamides comportant des motifs du type de ceux obtenus par réaction d'un diacide sur une diamine, modifiés par un composé multifonctionnel. Les articles finis mis en forme à partir de ces polyamides ou de compositions à base de ces polyamides présentent d'excellentes propriétés mécaniques, ainsi qu'un très bon aspect de surface. L'invention concerne également un procédé d'obtention de ces polyamides et compositions.

Dans le domaine des plastiques techniques, on cherche souvent à modifier les compositions polymères afin de conférer des propriétés intéressantes aux articles mis en forme à partir de ceux-ci ou de compositions les comprenant. Les propriétés mécaniques et l'aspect de surface des articles sont des exemples de propriétés observées sur les articles.

Les compositions polymères comprennent souvent des charges destinées à modifier les propriétés mécaniques ou à diminuer les coûts du matériau. Si les charges sont présentes en grande quantité, l'aspect de surface des articles obtenus peut devenir insatisfaisant.

Le brevet FR 98 15878 (2 743 077) décrit des compositions comprenant des charges et un polyamide modifié par un composé multifonctionnel. Le polyamide présente au moins en partie une structure macromoléculaire en forme d'étoile avec des motifs de répétitions de type polyamide 6. De tels composés sont appelés polyamides étoiles. Ces polyamides présentent une fluidité élevée, ce qui permet d'augmenter le taux de charge dans la composition sans détérioration de l'aspect de surface, c'est-à-dire sans que les charges puissent être observées à la surface des articles. Le polyamide est obtenu par copolymérisation d'un composé multifonctionnel avec des monomères de type amino-acides ou lactames.

Le document EP 672 703 décrit un procédé de fabrication de polyamides étoiles différent, par introduction d'un composé multifonctionnel dans un polyamide lors d'une opération d'extrusion. Il est mentionné dans ce document qu'il est observé une diminution de la pression dans le dispositif d'extrusion pour différents polymères.

Les articles réalisés à partir de compositions comprenant une charge et une matrice constituée d'un polymère modifié conformément à ces documents présentent une surface qui ne laisse pas apparaître les charges. Toutefois l'aspect de surface est terne.

Dans de nombreux domaines, par exemple dans le domaine de la carrosserie automobile, on cherche à obtenir des articles dont l'aspect de surface est brillant ou à la surface desquels on observe une bonne réflexivité de la lumière.

La présente invention a pour objectif de proposer un polyamide modifié nouveau, contenant notamment des motifs récurrents du type de ceux obtenus par polycondensation d'un diacide carboxylique et d'une diamine, dont les propriétés thermomécaniques sont satisfaisantes, notamment la résistance au choc, et qui présente une fluidité élevée. Ce polyamide modifié, lorsqu'il est utilisé comme matrice avec des charges, permet d'obtenir des articles dont les surfaces présentent une bonne réflexivité. L'invention a donc également pour objectif de proposer des compositions chargées présentant un excellent aspect de surface. L'invention propose également un procédé d'obtention de tels polyamides ou compositions.

A cet effet l'invention propose un polyamide modifié susceptible d'être obtenu par mélange et réaction en phase fondue d'au moins les trois composés suivants :

- Composé A: un polyamide comportant des unités récurrentes de formule (I):

$$-[NH-R_1-NH-OC-R_2-CO]- \qquad (I)$$

- Composé B: un polyamide comportant des unités récurrentes de formule (II):

$$-[NH-R_3-CO]- \qquad (II)$$

- Composé C: un composé multifonctionnel comprenant au moins trois fonctions réactives choisies parmi les amines, les acides carboxyliques, et leurs dérivés, les fonctions réactives étant identiques,

les radicaux $R_1$, $R_2$, $R_3$ étant des radicaux hydrocarbonés, comportant éventuellement des hétéroatomes.

Le procédé de mélange et réaction en phase fondue consiste à mettre en présence les composés à une température suffisante et/ou un cisaillement suffisant pour que les composés soient en phase fondue, et réagissent au moins partiellement entre eux. Cette température est de préférence supérieure à 250°C. On pense que les fonctions

réactives du composé C réagissent au moins partiellement avec des fonctions terminales des chaînes polyamides des composés A et /ou B. Le temps de séjour des composés dans le dispositif de mélange et réaction doit être à cet effet de préférence suffisamment long.

Selon un mode de réalisation particulièrement avantageux le mélange en phase fondue et la réaction sont réalisés à l'aide d'un dispositif d'extrusion, par exemple un dispositif à vis simple ou à double vis.

De tels dispositifs sont couramment utilisés dans les domaines de la formulation des plastiques techniques et sont bien connus de l'homme du métier.

Les polyamides modifiés selon l'invention présentent une fluidité améliorée par rapport à des compositions identiques ne comportant pas de composé multifonctionnel, ou par rapport à des compositions obtenues à partir des composés A et C, sans composé B. Elles présentent en outre aussi une résistance aux chocs satisfaisante.

L'invention concerne aussi des compositions comportant des charges, de préférence des charges minérales, et une matrice constituée du polyamide modifié. La proportion pondérale des charges dans la composition est de préférence comprise entre 25 et 80 %. Les compositions chargées peuvent être réalisées par introduction des charges en fondu dans un dispositif d'extrusion, lors de la réalisation du mélange des composés A, B et C, ou ultérieurement par refusion ou extrusion d'un polyamide modifié obtenu par mélange des composés A, B et C.

Les charges minérales préférées sont choisies parmi les fibres de verre, les fibres de carbone, les fibres de céramiques, le talc, le kaolin, la wollastonite, les argiles exfoliées.

Les compositions peuvent contenir d'autres additifs tels que des ignifugeants, des lubrifiants, des stabilisants wollastoniques, des composés modificateurs de la résilience, les pigments, les colorants, les antioxydants, les plastifiants.

A titre d'exemple de composés ignifugeants, on peut citer le phosphore rouge, les dérivés de la mélamine tels que les mélamines phosphate, polyphosphate ou pyrophosphate, les composés halogénés, plus particulièrement bromés, les composés à base d'hydroxyde de magnésium.

A titre d'exemples de composés modificateurs de la résilience, on peut citer les élastomères, éventuellement greffés par de l'anhydride maléique, tels que les EPDM, les EPR, les SEBS, les élastomères silicones, les caoutchoucs nitriles.

Ces exemples n'ont aucun caractère limitatif.

Les proportions de chacun des trois composants utilisés pour l'obtention du polyamide modifié, éventuellement avec d'autres composés, sont de préférence les suivantes :

- Le rapport entre la masse du composé A et la masse totale des composés A, B et C, est comprise entre 1% et 98,5%
- Le rapport entre la masse du composé B et la masse totale des composés A, B et C, est comprise entre 1% et 98,5%
- La concentration équivalente molaire en fonctions réactives du composé C dans le polymère est supérieure à 1%. Elle est plus préférablement supérieure à 2%.

Par concentration équivalente molaire en fonctions réactives de composé C, on entend le nombre x défini par la formule suivante:

$$x = f * \frac{m_C / M_C}{m_A / M_A + 2 * m_B / M_B + m_C / M_C}$$

dans laquelle:

- f est le nombre de fonctions réactives du composé C
- $m_A$, $m_B$, $m_C$ sont respectivement les masses des composés A,B,C mélangés
- $M_A$, $M_B$ sont respectivement les masses molaires des unités récurrentes des composés A et B
- $M_C$ est la masse molaire du composé C.

Le rapport entre la masse du composé A et la masse totale des composés A, B et C est de préférence supérieur à 50%.

Le rapport entre la masse du composé C et la masse totale des composés A, B et C est de préférence compris entre 1,5% et 10%.

De nombreux composés multifonctionnels peuvent être utilisés pour la réalisation de l'invention. Ces composés sont des composés organiques ou organo-métalliques présentant au moins trois fonctions chimiques réactives,

toutes les fonctions réactives étant identiques. Ces fonctions sont choisies parmi les amines, les acide carboxyliques et leurs dérivés. Par fonction réactive, on entend une fonction susceptible de réagir avec une fonction terminale des chaînes polyamides des composés A et/ou B. Ces fonctions sont par exemple susceptibles de former des liaisons amides.

Les composés multifonctionnels peuvent être choisis parmi les composés présentant une structure arborescente ou dendritique.

Les composés multifonctionnels peuvent également être choisis parmi les composés de formule (III)

$$R4[A—X—H]_m \qquad (III)$$

dans laquelle

- A est une liaison covalente ou un radical hydrocarboné aliphatique pouvant comprendre des hétéroatomes, et comprenant de 1 à 20 atomes de carbone, de préférence de 1 à 6 atomes de carbone.
- X est un radical

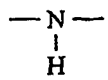 ou 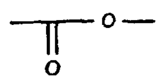

- $R_4$ est un radical hydrocarboné comprenant au moins 2 atomes de carbone, linéaire ou cyclique, aromatique ou aliphatique et pouvant comprendre des hétéroatomes.
- m est un nombre entier compris entre 3 et 8 (bornes incluses)

Selon encore une autre caractéristique préférée, le radical $R_4$ est soit un radical cycloaliphatique tel que le radical tétravalent de cyclohexanonyle, soit un radical 1,1,1-triyle-propane, 1,2,3-triyle-propane.

Comme autres radicaux $R_4$ convenables pour l'invention on peut citer, à titre d'exemple, les radicaux trivalents de phényle et cyclohexanyle substitués ou non, les radicaux tétravalents de diaminopolyméthylène avec un nombre de groupes méthylène compris avantageusement entre 2 et 12 tels que le radical provenant de l'EDTA (acide éthylène diamino tétracétique), les radicaux octovalents de cyclohexanonyle ou cyclohexadinonyle, et les radicaux provenant de composés issus de la réaction des polyols tels que glycol, pentaérythritol, sorbitol ou mannitol avec l'acrylonitrile.

Le radical A est, de préférence, un radical méthylénique ou polyméthylénique tel que les radicaux éthyle, propyle ou butyle, ou un radical polyoxyalkylènique tel que le radical polyoxyéthylènique.

Selon un mode de réalisation préféré de l'invention, le nombre m est supérieur à 3 et avantageusement égal à 3 ou 4.

La fonction réactive du composé multifonctionnel représentée par le symbole X-H est une fonction capable de former une fonction amide.

A titre d'exemple de composés polyfonctionnels de formule III, on peut citer la 2,2,6,6-tétra-(β-carboxyéthyl) cyclohexanone, le diaminopropane - N,N,N',N' acide tétraacétique de formule suivante :

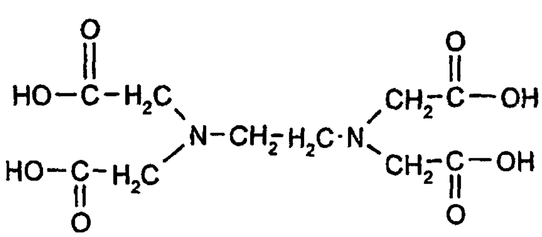

ou les composés provenant de la réaction du triméthylol propane ou du glycérol avec l'oxyde de propylène et amination des groupes hydroxyles terminaux, ces derniers composés sont commercialisés sous le nom commercial JEFFAMINES T® par la société HUNTSMAN, et ont comme formule générale :

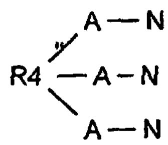

Dans laquelle :

- $R_4$ représente un radical 1,1,1-triyle propane, ou 1,2,3-triyle propane,
- A représente un radical polyoxyéthylénique.

Des exemples de composés multifonctionnels pouvant convenir sont notamment cités dans le document US 5346984, dans le document US 5959069, dans le document WO 9635739, dans le document EP 672703.
On cite plus particulièrement:
Les nitrilotrialkylamines, en particulier la nitrilotriéthylamine, les dialkylènetriamines, en particulier la diéthylènetriamine, les trialkylènetétramines et tétraalkylènepentamines, l'alkylène étant de préférence l'éthylène, la 4-aminoéthyl-1,8,octanediamine.
On cite aussi les dendrimères de formule (II)

$$(R_2\ N\text{-}(CH_2)_n)_2\text{-}N\text{-}(CH_2)_x\text{-}N\text{-}((CH_2)_n\text{-}NR_2)_2 \qquad \text{(II)}$$

dans laquelle
R est un atome d'hydrogène ou un groupement $-(CH_2)_n-NR^1{}_2$ où
$R^1$ est un atome d'hydrogène ou un groupement $-(CH_2)_n-NR^2{}_2$ où
$R^2$ est un atome d'hydrogène ou un groupement $-(CH_2)_n-NR^3{}_2$ où
$R^3$ est un atome d'hydrogène ou un groupement $-(CH_2)_n-NH_2$,
n étant un entier compris entre 2 et 6
x étant un entier compris entre 2 et 14.
n est de préférence un entier compris entre 3 et 4, en particulier 3, et x est de préférence un entier compris entre 2 et 6, de préférence compris entre 2 et 4, en particulier 2. Chaque radical R peut être choisi indépendamment des autres. Le radical R est de préférence un atome d'hydrogène ou un groupement $-(CH_2)_n-NH2$.
On cite aussi les composés multifonctionnels présentant 3 à 10 groupements acide carboxylique, de préférence 3 ou 4. Parmi ceux-ci on préfère les composés présentant un cycle aromatique et/ou hétérocyclique, par exemple des radicaux benzyl, naphtyl, anthracényl, biphényle et triphényle, ou les hétérocycles comme les pyridine, bipyridine, pyrrole, indole, furane, thiophène, purine, quinoléine, phénanthrène, porphyrine, phtalocyanine et naphtalocyanine. On préfère tout particulièrement l'acide 3,5,3',5'-biphényltétracarboxylique,les acides dérivés de la phtalocyanine et de la naphtalocyanine, l'acide 3,5,3',5'-biphényltétracarboxylique, l'acide 1,3,5,7-naphtalènetétracarboxylique, l'acide 2,4,6-pyridinetricarboxylique, l'acide 3,5,3',5'-bipyridyltétracarboxylique, l'acide 3,5,3',5'-benzophénonetétracarboxylique, l'acide 1,3,6,8-acridinetétracarboxylique, plus particulièrement encore l'acide trimésique et l'acide 1,2,4,5-benzènetétracarboxylique.
On cite aussi, les composés multifonctionnels dont le coeur est un hétérocycle présentant un point de symétrie, comme les 1,3,5-triazines, 1,4-diazines, la mélamine, les composés dérivés de la 2,3,5,6-tétraéthylpipérazine, des 1,4-pipérazines, des tétrathiafulvalènes. On cite plus particulièrement la 2,4,6-tri-(acide aminocaproïque)-1,3,5-triazine (TACT).

Le composé A est choisi de préférence parmi le polyamide 6.6, le polyamide 6.12, le polyamide 4.6, le polyamide 6.10, le polyamide 6.36, le polytéréphtalamide, les mélanges et copolymères à base de ces polyamides.

Selon un mode préférentiel de l'invention, le composé A est un polyamide comprenant au moins 95% en mole de motifs récurrents du PA 66. En particulier le composé A peut comprendre des motifs récurrents du PA 6.

Le composé B est choisi de préférence parmi le polyamide 6, le polyamide 11, le polyamide 12, les mélanges et copolymères à base de ces polyamides.

Selon un mode préférentiel de l'invention, le composé B est un polyamide comprenant au moins 95% en mole de motifs récurrents du PA 6. En particulier le composé B peut comprendre des motifs récurrents du PA 66.

Les compositions selon l'invention sont destinées à être mises en forme par les techniques usuelles, par exemple par des procédés d'injection. Elles conviennent à la fabrication de pièces pour automobile, par exemple des pièces de carrosserie, pour la fabrication d'éléments d'articles de sport et loisirs, par exemple des patins à roulettes, des fixations et chaussures de sports d'hiver.

Les compositions selon l'invention présentent des bonnes propriétés thermomécaniques. Elles présentent en particulier une température de déformation sous charge élevée. Sans vouloir se lier à une quelconque théorie, on pense que cette propriété est liée à la présence des motifs récurrents de type A.

Cette propriété entre autres peut rendre le matériau apte à supporter des procédés de mise en peinture par cataphorèse. Les compositions sont donc particulièrement adaptées pour la réalisation de pièces de carrosserie. D'autres détails ou avantages de l'invention apparaîtront plus clairement au vu des exemples donnés ci-dessous uniquement à titre indicatif.

Composés utilisés:

Composé A1: un polyamide 66 de viscosité relative (acide formique) de 50, commercialisé par la société Rhodia Engineering Plastics.

Composé B1: un polyamide 6 de viscosité relative (acide sulfurique) de 2,7, commercialisé par la société Rhodia Engineering Plastics.

Composé C1: la 2,2,6,6-tétra-(β-carboxyéthyl)-cyclohexanone préparée selon le procédé de synthèse décrit dans l'article "The Chemistry of Acrylonitrile II - Reactions with Ketones" JACS 64 2850 (1942) de Herman Alexander Buison et Thomas W. Riener.

Composé D: Wollastonite "wicroll® 10 PA".

Composé E: Acide isophtalique

Composés F: Stéarate d'aluminium et noir carbone

Evaluations

- résistance aux chocs sur éprouvette non entaillée selon la norme ISO 180/1A
- résistance aux chocs sur éprouvette entaillée selon la norme ISO 180/1U
- Indice de fluidité MFI en g/10 min déterminé selon la norme ISO 1133, sous 100 g de charge, à 275°C.

L'aspect de surface est observé sur des éprouvettes en forme de plaques de 15 cm sur 10 cm, de 5 mm d'épaisseur. Deux critères sont évalués visuellement : l'observation de charges à la surface des plaques, et la réflexivité.

Exemples

Les compositions sont obtenues par mélange en extrudeuse bi-vis de type WERNER et PFLEIDERER ZSK 40. Les conditions d'extrusion sont les suivantes:

- Température: 270°C
- Vitesse de rotation: 250 tours/min
- Débit: 30 kg/heure

Les compositions réalisées sont détaillées dans le tableau I. Les proportions sont indiquées en pourcentages en poids dans la composition.

Tableau I

| Composé | Exemple 1 | Exemple comparatif 2 | Exemple comparatif 3 | Exemple comparatif 4 | Exemple comparatif 5 |
|---|---|---|---|---|---|
| A1 | 37,7 | 57,7 | 58,7 | 38,7 | 37,7 |

Tableau I (suite)

| Composé | Exemple 1 | Exemple comparatif 2 | Exemple comparatif 3 | Exemple comparatif 4 | Exemple comparatif 5 |
|---|---|---|---|---|---|
| B1 | 20 | 0 | 0 | 20 | 20 |
| C1 | 1 | 1 | 0 | 0 | 0 |
| D | 40 | 40 | 40 | 40 | 40 |
| E | 0 | 0 | 0 | 0 | 1 |
| F | 1,3 | 1,3 | 1,3 | 1,3 | 1,3 |

Les propriétés sont mentionnées dans le tableau II

Tableau II

| Propriété | Exemple 1 | Exemple comparatif 2 | Exemple comparatif 3 | Exemple comparatif 4 | Exemple comparatif 5 |
|---|---|---|---|---|---|
| Indice de fluidité (g/10 min) | 27 | 10 | 12 | 16 | 29 |
| Choc non entaillé (kJ/$m^2$) | 65 | 50 | 66 | 68 | 55 |
| Choc entaillé (kJ/$m^2$) | 5,0 | 4,3 | 4,7 | 4,6 | 4,0 |
| Observation des charges à la surface | NON | NON | OUI | OUI | NON |
| Réflexivité | OUI | NON | NON | NON | OUI |
| Concentration équivalente en fonctions réactives du composé C | 2,37 | 2,35 | 0 | 0 | 0 |

Ces exemples montrent que des compositions à base de polyamide 66 modifiées par introduction en fondu d'un composé multifonctionnel ont une fluidité inférieure à celle des compositions à base de polyamide 66, comprenant aussi du polyamide 6, et modifiées par introduction en fondu d'un composé multifonctionnel.
Les compositions selon l'invention présentent de plus un aspect de surface amélioré.

## Revendications

**1.** Polyamide modifié susceptible d'être obtenu par mélange et réaction en phase fondue d'au moins les trois composés suivants:

- Composé A: un polyamide comportant des unités récurrentes de formule (I):

$$-[NH-R_1-NH-OC-R_2-CO]- \quad (I)$$

- Composé B: un polyamide comportant des unités récurrentes de formule (II):

$$-[NH-R_3-CO]- \quad (II)$$

- Composé C: un composé multifonctionnel comprenant au moins trois fonctions réactives choisies parmi les amines, les acides carboxyliques, et leurs dérivés, les fonctions réactives étant identiques,

les radicaux $R_1$, $R_2$, $R_3$ étant des radicaux hydrocarbonés, comportant éventuellement des hétéroatomes.

2. Polyamide modifié selon la revendication 1 **caractérisé en ce que** le mélange et la réaction en phase fondue sont réalisés dans un dispositif d'extrusion.

3. Polyamide modifié selon l'une des revendications précédentes **caractérisé en ce que**

- Le rapport entre la masse du composé A et la masse totale des composés A, B et C, est comprise entre 1 % et 98,5%
- Le rapport entre la masse du composé B et la masse totale des composés A, B et C, est comprise entre 1% et 98,5%
- La concentration équivalente molaire en fonctions réactives du composé C dans le polymère est supérieure à 1%.

4. Polyamide modifié selon la revendication 3 **caractérisé en ce que** le rapport entre la masse du composé A et la masse totale des composés A, B et C est supérieur à 50%.

5. Polyamide modifié selon l'une des revendications 3 ou 4 **caractérisé en ce que** le rapport entre la masse du composé C et la masse totale des composés A, B et C est compris entre 1,5% et 10%.

6. Polyamide modifié selon l'une des revendications précédentes **caractérisé en ce que** le composé multifonctionnel présente une structure arborescente ou dendritique.

7. Polyamide modifié selon l'une des revendications 1 à 6 **caractérisé en ce que** le composé multifonctionnel est représenté par la formule (III)

$$R4\{A\text{-}X\text{-}H]_m \qquad (III)$$

dans laquelle

- A est une liaison covalente ou un radical hydrocarboné aliphatique pouvant comprendre des hétéroatomes, et comprenant de 1 à 20 atomes de carbone, de préférence de 1 à 6 atomes de carbone.
- X est un radical

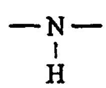 ou 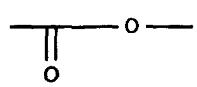

- $R_4$ est un radical hydrocarboné comprenant au moins 2 atomes de carbone, linéaire ou cyclique, aromatique ou aliphatique et pouvant comprendre des hétéroatomes.
- m est un nombre entier compris entre 3 et 8, bornes incluses.

8. Polyamide modifié selon la revendication 7 **caractérisé en ce que** le composé multifonctionnel est choisi parmi la 2,2,6,6-tétra-(β-carboxyéthyl)cyclohexanone, l'acide trimésique, la 2,4,6-tri-(acide amino caproïque)-1,3,5-triazine, la 4-aminoéthyle-1,8-octanediamine.

9. Polyamide modifié selon l'une des revendications précédentes **caractérisé en ce que** le composé A est choisi parmi le polyamide 66, les copolymères et mélanges à base de celui-ci.

10. Polyamide modifié selon l'une des revendications précédentes **caractérisé en ce que** le composé B est choisi parmi le polyamide 6, les copolymères et mélanges à base de celui-ci.

**11.** Composition comprenant une matrice et au moins une charge, **caractérisée en ce que** la matrice est un polyamide modifié selon l'une des revendications 1 à 10.

**12.** Composition selon la revendication 11 **caractérisée en ce que** la charge est choisie parmi les fibres de verre, les fibres de carbone, le kaolin, la wollastonite, le talc.

**13.** Composition selon l'une des revendications 11 ou 12 **caractérisée en ce que** la proportion pondérale de charge est comprise entre 25 et 80%.

**14.** Articles mis en forme à partir d'une composition selon l'une des revendications 11- 13.

**15.** Procédé de fabrication d'un polyamide modifié ou d'une composition par extrusion, **caractérisé en ce** les composés introduits dans le dispositif d'extrusion comprennent les composés suivants:

- Composé A: un polyamide comportant des unités récurrentes de formule (I):

$$-[NH-R_1-NH-OC-R_2-CO]- \qquad (I)$$

- Composé B: un polyamide comportant des unités récurrentes de formule (II):

$$-[NH-R_3-CO]- \qquad (II)$$

- Composé C: un composé multifonctionnel comprenant au moins trois fonctions réactives choisies parmi les amines les acides carboxyliques et leurs dérivés, les fonctions réactives étant identiques, les radicaux $R_1$, $R_2$, $R_3$ étant des radicaux hydrocarbonés, comportant éventuellement des hétéroatomes,
- Eventuellement une charge

**16.** Procédé selon la revendication 15 **caractérisé en ce que** la température d'extrusion est supérieure à 250°C.

**Patentansprüche**

**1.** Modifiziertes Polyamid, das geeignet ist, durch Vermischen und Reaktion in geschmolzener Phase von mindestens den drei folgenden Verbindungen erhalten zu werden:

- Verbindung A: ein Polyamid, umfassend wiederkehrende Einheiten der Formel (I):

$$-[NH-R_1-NH-OC-R_2-CO]- \qquad (I)$$

- Verbindung B: ein Polyamid, umfassend wiederkehrende Einheiten der Formel (II):

$$-[NH-R_3-CO]- \qquad (II)$$

- Verbindung C: eine multifunktionelle Verbindung, umfassend mindestens drei reaktive Funktionen, ausgewählt unter den Aminen, den Carbonsäuren und ihren Derivaten, wobei die reaktiven Funktionen identisch sind,

und worin die Reste $R_1$, $R_2$ und $R_3$ Kohlenwasserstoff-Reste sind, die gegebenenfalls Heteroatome umfassen.

**2.** Modifiziertes Polyamid nach Anspruch 1, **dadurch gekennzeichnet, daß** das Vermischen und die Reaktion in geschmolzener Phase in einer Extrusionsvorrichtung durchgeführt werden.

**3.** Modifiziertes Polyamid nach einem der vorstehenden Ansprüche, **dadurch gekennzeichnet, daß**

- das Verhältnis zwischen der Masse der Verbindung A und der Gesamtmasse der Verbindungen A, B und C zwischen 1 % und 98,5 % beträgt,
- das Verhältnis zwischen der Masse der Verbindung B und der Gesamtmasse der Verbindungen A, B und C zwischen 1 % und 98,5 % beträgt,
- die äquivalente molare Konzentration an reaktiven Funktionen der Verbindung C in dem Polymer über 1 % beträgt.

**4.** Modifiziertes Polyamid nach Anspruch 3, **dadurch gekennzeichnet, daß** das Verhältnis zwischen der Masse der Verbindung A und der Gesamtmasse der Verbindungen A, B und C über 50 % beträgt.

**5.** Modifiziertes Polyamid nach einem der Ansprüche 3 oder 4, **dadurch gekennzeichnet, daß** das Verhältnis zwischen der Masse der Verbindung C und der Gesamtmasse der Verbindungen A, B und C zwischen 1,5 % und 10 % beträgt.

**6.** Modifiziertes Polyamid nach einem der vorstehenden Ansprüche, **dadurch gekennzeichnet, daß** die multifunktionelle Verbindung eine baumartige oder dendritische Struktur aufweist.

**7.** Modifiziertes Polyamid nach einem der Ansprüche 1 bis 6, **dadurch gekennzeichnet, daß** die multifunktionelle Verbindung durch die Formel (III)

$$R_4[A\text{-}X\text{-}H]_m \qquad (III)$$

dargestellt wird, in der

- A eine kovalente Bindung oder ein aliphatischer Kohlenwasserstoff-Rest, umfassend 1 bis 20 Kohlenstoffatome , vorzugsweise 1 bis 6 Kohlenstoffatome, ist, der Heteroatome umfassen kann,
- X ein Rest

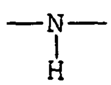 oder 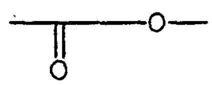 .

ist,
- $R_4$ ein linearer oder cyclischer, aromatischer oder aliphatischer Kohlenwasserstoff-Rest, umfassend mindestens zwei Kohlenstoffatome , ist, und der Heteroatome umfassen kann,
- m eine ganze Zahl zwischen 3 und 8 ist, Grenzwerte eingeschlossen.

**8.** Modifiziertes Polyamid nach Anspruch 7, **dadurch gekennzeichnet, daß** die multifunktionelle Verbindung unter 2,2,6,6-Tetra-(β-carboxyethyl)-cyclohexanon, Trimesinsäure, 2,4,6-Tri-(aminocapronsäure)-1,3,5-triazin und 4-Aminoethyl-1,8-octandiamin ausgewählt wird.

**9.** Modifiziertes Polyamid nach einem der vorstehenden Ansprüche, **dadurch gekennzeichnet, daß** die Verbindung A unter Polyamid 66 und den Copolymeren und Mischungen auf dessen Basis ausgewählt wird.

**10.** Modifiziertes Polyamid nach einem der vorstehenden Ansprüche, **dadurch gekennzeichnet, daß** die Verbindung B unter Polyamid 6 und den Copolymeren und Mischungen auf dessen Basis ausgewählt wird.

**11.** Zusammensetzung, umfassend eine Matrix und mindestens einen Füllstoff, **dadurch gekennzeichnet, daß** die Matrix ein modifiziertes Polyamid nach einem der Ansprüche 1 bis 10 ist.

**12.** Zusammensetzung nach Anspruch 11, **dadurch gekennzeichnet, daß** der Füllstoff unter Glasfasern, Kohlenstoffasern, Kaolin, Wollastonit und Talk ausgewählt wird.

**13.** Zusammensetzung nach einem der Ansprüche 11 oder 12, **dadurch gekennzeichnet, daß** das Gewichtsverhältnis des Füllstoffs zwischen 25 % und 80 % beträgt.

**14.** Artikel, geformt ausgehend von einer Zusammensetzung nach einem der Ansprüche 11 bis 13.

**15.** Verfahren zur Herstellung eines modifizierten Polyamids oder einer Extrusions-Zusammensetzung, **dadurch gekennzeichnet, daß** die Verbindungen, die in die Extrusionsvorrichtung eingetragen werden, die folgenden Verbindungen umfassen:

- Verbindung A: ein Polyamid, umfassend wiederkehrende Einheiten der Formel (I):

$$-[NH-R_1-NH-OC-R_2-CO]- \quad (I)$$

- Verbindung B: ein Polyamid, umfassend wiederkehrende Einheiten der Formel (II) :

$$-[NH-R_3-CO]- \quad (II)$$

- Verbindung C: eine multifunktionelle Verbindung, umfassend mindestens drei reaktive Funktionen, ausgewählt unter den Aminen, den Carbonsäuren und ihren Derivaten, wobei die reaktiven Funktionen identisch sind, und worin die Reste $R_1$, $R_2$ und $R_3$ Kohlenwasserstoff-Reste sind, die gegebenenfalls Heteroatome umfassen,
- gegebenenfalls einen Füllstoff.

**16.** Verfahren nach Anspruch 15, **dadurch gekennzeichnet, daß** die Temperatur der Extrusion über 250 °C beträgt.

## Claims

**1.** Modified polyamide capable of being obtained by melt-blending and melt-reacting at least the following three compounds:

- Compound A: a polyamide containing repeating units of formula (I):

$$-[NH-R_1-NH-OC-R_2-CO]- \quad (I)$$

- Compound B: a polyamide containing repeating units of formula (II):

$$-[NH-R_3-CO]- \quad (II)$$

- Compound C: a multifunctional compound comprising at least three reactive functions chosen from amines, carboxylic acids and derivatives thereof, the reactive functions being identical,

the radicals $R_1$, $R_2$ and $R_3$ being hydrocarbon-based radicals optionally comprising hetero atoms.

**2.** Modified polyamide according to Claim 1, **characterized in that** the melt-blending and melt-reacting are performed in an extrusion device.

**3.** Modified polyamide according to one of the preceding claims, **characterized in that**

- the ratio between the mass of compound A and the total mass of the compounds A, B and C is between 1% and 98.5%
- the ratio between the mass of compound B and the total mass of the compounds A, B and C is between 1% and 98.5%
- the equivalent molar concentration of reactive functions of compound C in the polymer is greater than 1%.

**4.** Modified polyamide according to Claim 3, **characterized in that** the ratio between the mass of compound A and the total mass of the compounds A, B and C is greater than 50%.

**5.** Modified polyamide according to either of Claims 3 and 4, **characterized in that** the ratio between the mass of compound C and the total mass of the compounds A, B and C is between 1.5% and 10%.

**6.** Modified polyamide according to one of the preceding claims, **characterized in that** the multifunctional compound has an arborescent or dendritic structure.

**7.** Modified polyamide according to one of claims 1 to 6, **characterized in that** the multifunctional compound is represented by formula (III)

$$R4[A\text{-}X\text{-}H]_m \qquad \text{(III)}$$

in which

- A is a covalent bond or an aliphatic hydrocarbon-based radical possibly containing hetero atoms, and containing from 1 to 20 carbon atoms and preferably from 1 to 6 carbon atoms;
- X is a radical

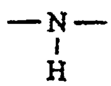

or

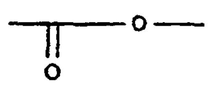

- $R_4$ is a linear or cyclic, aromatic or aliphatic hydrocarbon-based radical containing at least two carbon atoms and possibly containing hetero atoms;
- m is an integer between 3 and 8, limits included.

**8.** Modified polyamide according to Claim 7, **characterized in that** the multifunctional compound is chosen from 2,2,6,6-tetra(β-carboxyethyl)cyclohexanone, trimesic acid, 2,4,6-tri(aminocaproic acid)-1,3,5-triazine and 4-aminoethyl-1,8-octanediamine.

**9.** Modified polyamide according to one of the preceding claims, **characterized in that** compound A is chosen from polyamide-66, and copolymers and blends thereof.

**10.** Modified polyamide according to one of the preceding claims, **characterized in that** compound B is chosen from polyamide-6, copolymers and blends thereof.

**11.** Composition comprising a matrix and at least one filler, **characterized in that** the matrix is a modified polyamide according to one of Claims 1 to 10.

**12.** Composition according to Claim 11, **characterized in that** the filler is chosen from glass fibres, carbon fibres, kaolin, wollastonite and talc.

**13.** Composition according to either of Claims 11 and 12, **characterized in that** the weight proportion of filler is between 25% and 80%.

**14.** Articles shaped from a composition according to one of Claims 11 to 13.

**15.** Process for manufacturing a modified polyamide or a composition by extrusion, **characterized in that** the compounds introduced into the extrusion device comprise the following compounds:

- Compound A: a polyamide comprising repeating units of formula (I):

$$\text{-[NH-}R_1\text{-NH-OC-}R_2\text{-CO]-} \qquad \text{(I)}$$

- Compound B: a polyamide comprising repeating units of formula (II):

$$-[NH-R_3-CO]- \quad (II)$$

- Compound C: a multifunctional compound comprising at least three reactive functions chosen from amines, carboxylic acids and derivatives thereof, the reactive functions being identical,
  the radicals $R_1$, $R_2$ and $R_3$ being hydrocarbon-based radicals optionally comprising hetero atoms,
- optionally, a filler.

**16.** Process according to Claim 15, **characterized in that** the extrusion temperature is greater than 250°C.